# EUROPEAN PATENT APPLICATION

(11) **EP 1 402 953 A1**
(43) Date of publication of application: **31.03.2004**
(21) Application number: 03254306.8
(22) Date of filing: 07.07.2003
(51) Int. Cl.: B01L 3/02, B01J 19/00

(54) **Method for producing a microarray**

(30) Priority: 16.07.2002 JP 2002206356
(71) Applicant: NISSHINBO INDUSTRIES, INC., Chuo-ku, Tokyo 103 (JP)
(72) Inventor: Shoji, Tomoaki Nisshinbo Industries Inc., Chiba-shi Chiba (JP)
(74) Representative: Tombling, Adrian George

(57) **Abstract**

Microarray is produced by the method comprising the steps of forming a droplet of a liquid sample containing a biological substance at a pouring port of a micropipette by ejecting a predetermined amount of the liquid sample from the micropipette, supporting the micropipette at a position where the droplet formed at the pouring port can contact with a substrate, and transferring the droplet formed at the pouring port to the substrate, thereby spotting the sample on the substrate. The microarray has a plurality of visually identifiable spots of samples on the substrate.

## Description

### Background of the Invention

### Field of the Invention

The present invention relates to a method for producing a microarray, and more particularly to a method for forming spots that can easily be identified visually by using an automated dispensing device equipped with a micropipette.

### Description of Related Art

For detecting a biological substance that can be detected by virtue of a specific reaction, a microarray has conventionally been used, in which a biological substance is fixed at a plurality of positions on a surface of a substrate. As a method for producing such a microarray, for example, a method in which a dispensing device having a plurality of micropipettes is used has been known. For example, such a dispensing device and the method for producing a DNA chip (DNA microarray) therewith are disclosed in JP 2001-337096A.

In the method, a dispensing device is used which has pouring ports for a sample solution being poured into, a cavity for the sample solution being drawn from or stored into and ejecting ports for the sample solution being ejected from on at least one substrate. The device has a piezo/electrostriction element on at least one wall surface of a base material that constitutes the cavity and has a plurality of micropipettes arranged in such way that the sample solution can move around in the cavity. The device is equipped with an upwardly projecting pin over the ejecting port of the micropipettes.

In the method for producing a DNA chip, microarray is made by ejecting a sample solution with this dispensing device. Supply of the sample solution is performed by positioning a cartridge having a number of solution storage ports above the dispensing device, making a hole in each solution storage port with each pin and introducing the solutions stored in the solution storage ports into the pouring ports. The above-mentioned dispensing device is excellent in that it enables to form minute spots at high precision and at high speed as well as to supply solution to each micropipette quickly, efficiently and precisely and furthermore, it enables to smoothly perform the whole steps from the supply of the solution through the supply of the solution onto a substrate.

In a microarray on which a plurality of minute spots are formed, the spots are difficult to be visually identified. Therefore, in detecting a biological substance by using such a microarray, it has been generally the case that fluorescence labeling is adopted and the labeled biological substance is detected by a fluorescent scanner. For example, in detecting a DNA, the DNA is hybridized with a PCR (polymerase chain reaction) product labeled with a fluorescent substance such as Cy3 or Cy5, and then detected by a fluorescent scanner.

On the other hand, as a method for detecting a biological substance using a microarray, a method has been known in which DNA is visually detected after being labeled with colored substance. The detection method is excellent in producing satisfactory detection results easily without requiring any detection instrument. For example, in the detection of DNA, the DNA is hybridized with a biotin-labeled PCR product and then, the presence or absence of colored substance is visually detected with St-HRP (streptoavidin-horse radish peroxidase) and TMB (tetramethylbenzidine). However, in a microarray on which a plurality of minute spots are formed, it is difficult to identify each spot visually with a colored substance.

JP 2001-337096A cited above discloses a method for forming a large spot by merging a plurality of minute spots. However, in the method, forming large spots requires large amount of sample and longer time since such spots are formed by spotting the sample on an array repeatedly.

### Summary of Invention

An object of the present invention is to spot a sample in a visually identifiable size on a microarray in one droplet of a liquid sample, by using an automated dispensing device which is equipped with a micropipette and is capable of forming minute spots.

In order to achieve the above object, the present invention provides a method that enables to form a spot having a diameter of 1 mm or more by spotting a sample onto a substrate in an amount of approximately several microliter by using an automated dispensing device that can be used for detecting a biological substance.

That is, the present invention provides a method for producing a microarray comprising steps of spotting a liquid sample containing a biological substance onto a water repellent substrate by using an automated dispensing device that is equipped with a micropipette and automatically performs at least the operations of supporting the micropipette and ejecting a liquid sample stored in the micropipette, and of drying the attached sample so that the biological substance is fixed on the substrate. In the method, a predetermined amount of the sample is ejected from the micropipette to form a droplet of the sample at a pouring port of the micropipette. The micropipette is supported at a position where the droplet formed at the pouring port can contact with the substrate and the droplet is transferred to the substrate to be spotted thereto.

### Brief Description of Drawings

Fig. 1 is a schematic diagram showing a state in which the droplet of a sample is formed at an ejecting port of a micropipette according to an embodiment of the present invention.
Fig. 2 is a schematic diagram showing a state in which the droplet of the sample formed at the ejecting port contacts with a surface of a substrate according to an embodiment of the present invention.
Fig. 3 is a schematic diagram showing a state in which a droplet of the sample is transferred from the ejecting port to the surface of the substrate according to an embodiment of the present invention.
Fig. 4 is a schematic diagram showing a state in which the droplet of the sample is spotted onto the surface of the substrate according to an embodiment of the present invention.
Fig. 5 is a schematic diagram showing an example of the substrate that can be advantageously used in the present invention.
Fig. 6 is a diagram showing an arrangement of DNA samples fixed onto the surface of the substrate.
Fig. 7 is a diagram showing the state of a microarray on which a spot is colored in blue according to an example of the present invention.

### Detailed Description of the Invention

In the method for producing a microarray of the present invention, droplets of a liquid sample containing a biological substance are formed at a pouring port of the micropipette by an automated dispensing device that is equipped with a micropipette and automatically performs the operations of supporting the micropipette and ejecting a liquid sample stored in the micropipette. The micropipette is supported appropriately and the droplet attached to the ejecting port is spotted'onto the water repellent substrate so that the droplet is transferred from the ejecting port to the substrate. According to the method of the present invention, the diameter of a spot can be set freely dependent on a purpose of each experiment by adjusting the amount of the sample ejected and the position where the micropipette is supported.

The automated dispensing device used in the present invention is a device that is equipped with a micropipette and automatically performs the operations of supporting the micropipette and ejecting a liquid sample stored in the micropipette. In the present invention, the number of micropipettes provided in the automated dispensing device is not particularly limited, but it is preferable to use an automated dispensing device which is usually used in detecting a biological substance with a microtiter plate and have a plurality of micropipettes. The kind of micropipettes is not particularly limited so far as they can eject a suitable amount of a sample, and various kinds of known micropipettes may be used. Examples of such micropipettes include a micropipette that has the structure disclosed in JP 2001-337096A and a micropipette that is equipped with a nozzle having an ejecting port at the pointed end thereof.

The aforementioned automated dispensing device having a plurality of micropipettes is preferably a device that can automatically perform various operations such as pouring sample solution into the micropipettes, rinsing the micropipettes, and transporting and rinsing the microarray with a robot arm in addition to supporting the micropipettes and ejecting samples with the micropipettes. As such an automated dispensing device, an automated dispensing device can be used which has a microtiter plate and automatically performs the whole operations from the supply of a sample into each well of the microtiter plate through detection of a biological substance. Examples of such an automated dispensing device include Multi-Probe II manufactured by Perkin-Elmer Life Science. Use of such automated dispensing devices can prevent human error in the entire detection steps from producing a microarray through detection of a biological substance and can perform detection with high reproducibility and high reliability.

The kind of samples used in the present invention is not particularly limited so far as it is a liquid sample containing a biological substance. The biological substance is a substance that can bring a specific reaction usually detected by a microarray and includes, for example, nucleic acids, proteins, sugars and lipids. The biological substance may be either an unknown substance to be detected or a known substance for detecting an unknown interacting substance. The sample may contain controlling agents such as buffer solution for adjusting the chemical properties of the biological substance or additives such as tackifiers for adjusting the physical properties of the sample in an appropriate amount.

The substrate used in the present invention is not particularly limited so far as it has water repellency. The water repellency of the substrate is preferably in such a level that allows surface tension to arise on the spot on the substrate. When the water repellency of the substrate is too weak, the formed spot will spread too broad on the surface of the substrate, which is undesirable for performing a specific reaction against the fixed a biological substance or a coloring detection sufficiently and uniformly. When the water repellency of the substrate is too strong, it is also undesirable since the position of the spot on the surface of the substrate is difficult to be set and the ejected amount of the sample increases.

In the present invention, the water repellency of the substrate may be non-uniform from place to place on the surface of the substrate. For example, region of weak water repellency and region of strong water repellency surrounding the region of weak water repellency may be distributed on the surface of the substrate. The water repellency of the substrate can be adjusted by selecting the material of the substrate or treating the surface of the substrate with hydrophobitization or hydrophilitization reagent, etc.

The substrate of the present invention can be made from known materials. Examples of such known materials include glass, plastics, metals, and ceramics. It is preferable that the substrate used in the present invention is made of a material onto which biological substances can be fixed. Such materials include glass and plastics. Plastics are particularly preferable since it is easily molded. Even materials onto which biological substances cannot be fixed sufficiently may be used advantageously for the substrate of the present invention when the surface is covered with a resin compound such as a carbodiimide resin.

The present invention includes the steps of ejecting a predetermined amount of a sample from a micropipette to form a droplet of the sample at the ejecting port of the micropipette and of supporting the micropipette at a position where the droplet can contact with a substrate. By those steps, the droplet formed at the ejecting port is transferred to the substrate to have the sample spotted thereon. In the present invention, the order of performing each step is not particularly set. The micropipette may be supported after the droplet of the sample is formed, the droplet of the sample may be formed after the micropipette is supported, or the micropipette may be supported while forming the droplet of the sample.

In the present invention, the amount of an ejected sample from a micropipette may vary depending on the various conditions such as the size of a spot to be formed and the physical properties of the sample and the substrate. It is preferable that the amount of a sample ejected from one micropipette is 0.5-2.0 µl in order to efficiently form an easily visualized spot of a diameter of about 1mm in one drop of the sample.

In the present invention, the position at which a micropipette is supported may vary depending on various conditions such as the amount of an ejected sample and the physical properties of the sample. The position is not particularly limited so far as it is the position where the droplet formed at the ejecting port of the micropipette when the predetermined amount of the sample completely ejected, can contact with the surface of a substrate in a state where the droplet is still attached to the ejecting port.

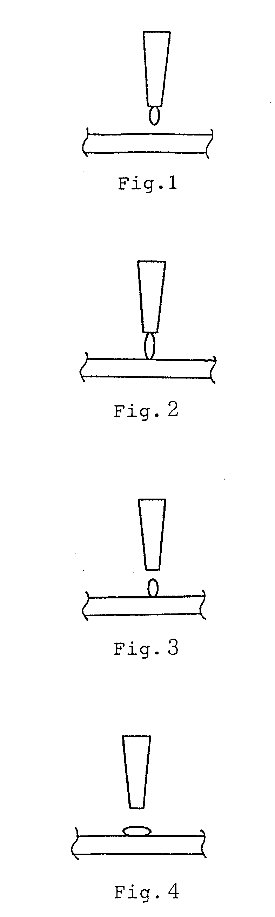

Embodiments of the present invention are described in more detail below. As shown in Fig. 1, the micropipette is supported in such position that the ejecting port 2 opened at the pointed end of nozzle 1 of the micropipette is separate from the surface of the substrate 3 at a predetermined distance and then samples start to be ejected. The sample ejected is stuck to the pointed end of the nozzle 1 by virtue of surface tension to form a droplet that is attached to the ejecting port 2.

After a predetermined amount of the sample is ejected, the droplet of the sample formed at the ejecting port 2 contacts with the substrate 3 as shown in Fig. 2. As mentioned above, the position at which the micropipette is supported may be adjusted after completion of the ejection of the sample or before the completion.

When the droplet of the sample formed at the pointed end of the nozzle 1 contacts with the substrate 3, the droplet is transferred from the nozzle 1 to the substrate 3 as shown in Fig. 3. Since the distance between the pointed end of the nozzle 1 and the substrate 3 may differ depending on the amount of a sample ejected and on various physical properties such as viscosity, and surface tension of the sample as well as the water repellency of the substrate, it may be necessary to adjust the distance dependent on such factors.

The droplet that is transferred to the substrate spreads over the surface of the substrate as shown in Fig. 4. The biological substance in the sample is fixed onto the surface of the substrate 3 and the droplet is dried so that a spot is formed.

To exemplify more specific conditions, Carbostation (slide glass whose surface is coated with a carbodiimide resin, manufactured by Nisshinbo Industries, Inc.) can be used as a substrate and 6xSSC (10xSSC: 1.5 M sodium chloride and 0.15 M sodium citrate) can be used as a solvent for the sample. DNA can be used as a biological substance. In the case where the concentration of the biological substance (DNA concentration) in the sample solution is set to 0.1 pmol/µl and the amount of the ejected sample is set to 1 µl, setting the distance between the pointed end of the nozzle 1 and the substrate 3 to 0.1 to 0.2 mm readily provides a spot of a diameter of 1 mm.

Spots that can readily be identified visually is formed on the microarray which is produced by the method of the present invention. The spots can be detected by a known detection method such as detection with fluorescence or with coloring. In the present invention, the detection with coloring is preferred from the viewpoint of easy visual detection without detection instruments.

In the detection of a biological substance using the microarray on which a minute spot is formed, a slide glass is usually used as a substrate. This is mainly for the purpose of avoiding absorption of light with a wavelength within the ultraviolet region that is emitted from a fluorescent scanner at the time of detecting the biological substance.

However, detection with a coloring reagent can be used advantageously in the present invention since spots of visually identifiable size can be formed and hence the results of detection can be identified visually with ease. Therefore, plastic can be used as a material of the substrate, although it has not been adopted for a substrate because it absorbs the light with a wavelength within the ultraviolet region.

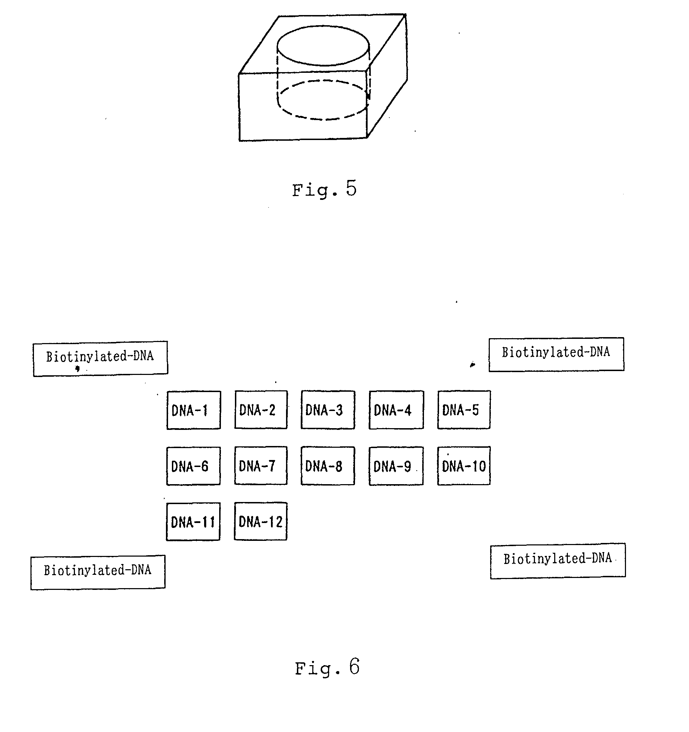

Plastic, which is capable of being molded easily, can be used as a material of the substrate in the present invention, therefore, substrate of arbitrary shapes that are different from the flat plate-like shape of a conventional slide glass can also be used. Examples of substrates having arbitrary shapes include a substrate having a stereoscopic shape. Specifically, as shown in Fig. 5, such shapes include a shape that can make the substrate serve as a reactor, that is, a shape having vessel-like sample fixing part which is equipped with a flat bottom portion where a biological substance is fixed and with a wall portion provided vertically around the periphery of the flat bottom portion, wherein the vessel-like sample fixing part is supported at a predetermined height.

The method for producing a microarray according to the present invention is a method for producing a microarray comprising spotting a liquid sample containing a biological substance onto a water repellent substrate by using an automated dispensing device that is equipped with a micropipette and automatically performs at least the operations of supporting the micropipette and ejecting a liquid sample stored in the micropipette, and drying the attached sample so that the biological substance is fixed onto the substrate, wherein the method comprises the steps of forming a droplet of the sample at a pouring port of the micropipette by ejecting a predetermined amount of the sample from the micropipette, supporting the micropipette at a position where the droplet formed at the pouring port can contact with the substrate and transferring the droplet formed at the pouring port to the substrate, thereby spotting the sample onto the substrate. According to the method, a visually identifiable spot can be formed in one drop of the sample by using an automated dispensing device that is equipped with a micropipette and capable of making a minute spot.

In the present invention, attaching a sample at a plurality of positions on the substrate by using an automated dispensing device having a plurality of micropipettes makes it more effective to produce a microarray having a plurality of spots and to automatically perform the whole operations from production of a microarray through detection of a biological substance.

In the present invention, forming a droplet by ejecting 0.5 to 2.0 µl of a sample from one micropipette enables to form a visually identifiable spot in a relatively small amount of the sample and thus is more effective in forming spots.

### Example

Hereinafter, an example of the present invention will be described.

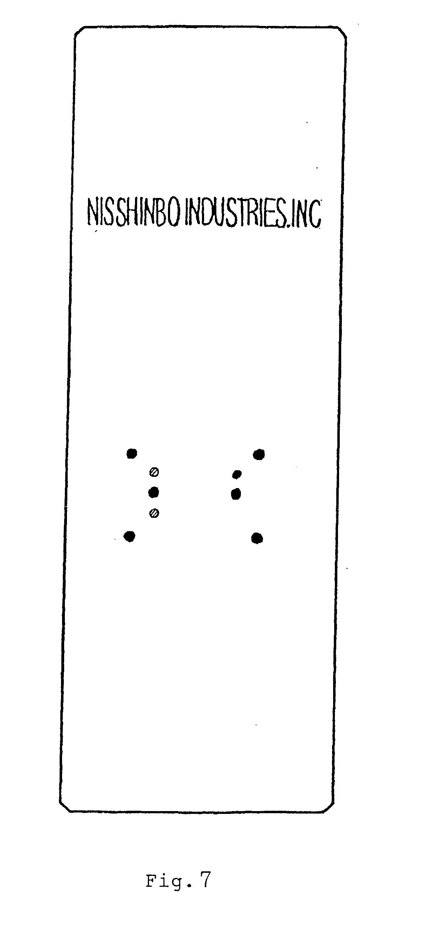

In order to produce a microarray, "Carbostation" manufactured by Nisshinbo Industries, Inc. was used as a substrate and a DNA sample was spotted onto the substrate in the same manner as in the embodiment described above with reference to Fig. 1, 2, 3 and 4. For the DNA sample, 6xSSC was used as a solvent. DNA having sequence of SEQ ID No: 1, 2, 3 or 4 shown in Table 1 was used as a DNA sample at the concentration of 0.1 pmol/ µl. At the positions of DNA-1, DNA-5, DNA-6, DNA-10 and DNA-11 in Fig. 6, the DNA of SEQ ID No:4 was spotted and at other positions was spotted any DNA randomly selected from the DNAs of SEQ ID No: 1, 2 and 3 shown in Table 1. For spotting the sample, Multi-Probe II manufactured by Perkin-Elmer Life Science was used as an automated dispensing device. The distance between the ejecting port and the substrate was set to 0.2 mm and the amount of an ejected sample from the ejecting port was set to 1 µl.

The kinds of the DNA samples and the arrangement thereof are shown in Fig. 6.

After the DNA sample was spotted onto the substrate, the DNA was fixed to the substrate by a conventional method and rinsed, and then solution containing PCR product was spread over the surface of the substrate and hybridization was performed in a thermostat. As the PCR product, λ DNA fragment was used that was amplified by PCR using the primer of SEQ ID No: 4 and SEQ ID No: 5 shown in Table 1. The results of agarose electrophoresis of the obtained PCR fragment and ethidium bromide staining thereof indicated that the fragment had a length of about 100 bp.

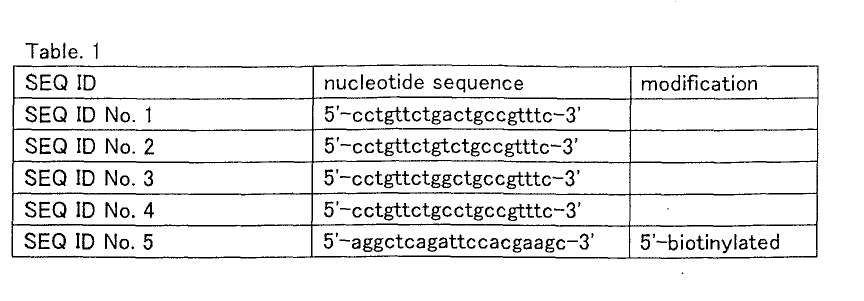

After the hybridization was completed, the microarray was rinsed in order to remove the non-reacted substance and streptoavidin-biotin-linked HRP (Horse Radish Peroxidase). "Conjugate" (manufactured by Special Immunology Research Institute) was spread over surface of the substrate and allowed to react for 30 minutes at room temperature. After that, the microarray substrate was immersed in a TBST buffer (20 mM Tris-HCl (pH 7.5), 150 mM NaCl and 0.05% Tween 20) and shaken.

Then, TMB Substrate Kit (manufactured by Funakoshi Co., Ltd.) was used as a reaction substrate for HRP according to the standard protocol and the prepared reaction substrate was spread on the microarray substrate and left to stand for 30 minutes. After that, the microarray substrate was immersed in distilled water to stop the coloring reaction.

As a result of the above-mentioned operation, blue-colored spots each having a diameter of about 1 mm were obtained. Fig. 7 shows the state of the microarray substrate after the coloring reaction.

## Claims

1. A method for producing a microarray comprising the steps of spotting a liquid sample containing a biological substance onto the substrate by using an automated dispensing device which is equipped with micropipette and automatically performs at least the operations of supporting the micropipette and ejecting a liquid sample stored in the micropipette, and drying the spotted sample so that the biological substance is fixed onto the substrate, wherein the method comprises the steps of:
forming a droplet of the sample at a pouring port of the micropipette by ejecting a predetermined amount of the sample from the micropipette,
supporting the micropipette at the position where the droplet formed at the pouring port can contact with the substrate and
transferring the droplet formed at the pouring port to the substrate, thereby spotting the sample onto the substrate.

2. The method according to claim 1, wherein the sample is spotted at a plurality of positions on the substrate by an automated dispensing device having a plurality of micropipettes.

3. The method according to claim 1 or 2, wherein the droplet is formed by ejecting 0.5 to 2.0 µl of the sample from the micropipette.
